# EUROPÄISCHE PATENTSCHRIFT

(11) **EP 3 190 873 B1**
(45) Veröffentlichungstag und Bekanntmachung des Hinweises auf die Patenterteilung: **09.10.2019**
(21) Anmeldenummer: 15807603.4
(22) Anmeldetag: 17.08.2015
(51) Int. Cl.: A01K 1/02, A45F 3/04, A45F 3/10

(54) **RUCKSACK ZUM TRANSPORT VON TIEREN**
BACKPACK FOR TRANSPORTING ANIMALS
SAC À DOS POUR LE TRANSPORT D'ANIMAUX

(30) Priorität: 11.09.2014 DE 202014007394 U
(43) Veröffentlichungstag der Anmeldung: 19.07.2017
(73) Patentinhaber: Maier, Roman, 83219 Starnberg (DE)
(72) Erfinder: Maier, Roman, 83219 Starnberg (DE)
(74) Vertreter: Hoefer & Partner Patentanwälte mbB
(86) Internationale Anmeldenummer: PCT/EP2015/025060
(87) Internationale Veröffentlichungsnummer: WO 2016/096150

(56) Entgegenhaltungen:
- CN-U- 203 493 023
- DE-U1-202011 102 300

## Beschreibung

Die Erfindung bezieht sich auf einen Rucksack, der über ein eigens für vierbeinige Tiere geschaffenes Fixiersystem verfügt, welches den unterschiedlichen Größenverhältnissen der zu transportierenden Tiere, insbesondere aber Hunden und Katzen gerecht wird. Zudem wird in der vorliegenden Erfindung das Tragebedürfniss der Tiere berücksichtigt sowie das einfache und unkomplizierte Anlegen des Rucksacks an den Tieren.

Rucksäcke zum Tragen von Tieren sind vorbekannt. Hierbei handelt es sich um Rucksäcke, deren oben befindliche Öffnung so ausgestaltet sind, dass der Kopf des Tieres frei aus dem Rucksack herausschaut, während sich der Körper des Tieres in dem Rucksackbeutel befindet. Nachteil dieser Ausgestaltung von Tierrucksäcken ist, dass der Körper des Tieres in dem Rucksackbeutel nicht fixierbar ist, so dass das Tier sich in dem Rucksackbeutel frei bewegen kann. Dies ist zum Einen für das Tier eine unangenehme Position, da es sich in der nahezu sitzenden oder auch liegenden Position befindet, in der es aber keinen richtigen Halt hat und daher sich in einer sehr unsicheren Position befindet. Durch die unsichere Position bewegt sich das Tier aber, um gegensteuernd zu den Tragbewegungen durch den Rucksackträger sicheren Halt durch Ausgleichsbewegungen zu finden. Durch Bewegungen des Tierkörpers kommt es dann andererseits zu Verlagerungen des Tierkörpers in dem Rucksackbeutel, damit zu Gewichtsverlagerungen und im Weiteren zu einseitigen und wechselseitigen, nicht mehr mittigen Gewichtsverlagerungen, die sich für den Rucksackträger selbst sowie für das Tier sehr unangenehm und unkomfortabel gestalten. Wird ein Tier in einem solchen herkömmlichen Rucksack z. B. bei einer Bergwanderung getragen, so kann die Gewichtsverlagerung des Tieres und damit eine plötzliche einseitige Tragesituation u. U. zum Straucheln oder zum Fall des Rucksackträgers führen.

Zudem ist es schwierig, das Tier in diesem Rucksack zu verbringen. Dazu muss der Körper des Tieres mit dem Schwanz, den Hinterpfoten und dem Rumpf in den Rucksack gehoben werden, was erfahrungsgemäß zu einer Abwehrreaktion des Tieres führt und damit das Verbringen des Tieres in den Rucksack sehr erschwert.

Die CN 203493023 U offenbart einen Haustierrucksack bei dem ein Aufnahmeraum in einem Beutelkörper ausgebildet ist. Außerdem ist auf dem Boden des Aufnahmeraumes des Beutelkörpers ein Stützpolster angeordnet, so dass die Gestaltung des am Boden des Beutelkörpers angeordneten Stützkissens zur wirksamen Abstützung genutzt werden kann. Eine Verbesserung gegenüber diesen einfachen Tierrucksäcken zeigt die Gebrauchsmusterschrift DE 20 2011 102 300 (Maier, Roman). Hier wird bereits die Ausführung eines Tierrucksacks gezeigt, durch welche das Tier fixiert und in einer für das Tier angenehmen Trageposition gehalten wird.

Die Erfindung betrifft einen Rucksack zum Tragen eines Tieres gemäß der Ansprüche 1 bis 10.

Insbesondere ein mehrfach verstell- und justierbares Brustgeschirr, ein Reissverschlußsystem zum Trennen des Rückenteils vom Sackteil des Rucksacks, eine Öffnung / Aussparung zum Herausnehmen der Rute des Tieres damit dieses nicht auf seiner eigenen Rute sitzen muss sowie Öffnungen /Aussparungen zum Durchführen der Hinterläufe im sackartigen Vorderteil des Tiertragerucksack als Aufnahmetasche stellen wesentliche Verbesserungen dar.

Gemäß der vorliegenden Erfindung (siehe Anspruch 1) wird dies dadurch erreicht, dass der obere Teil eines Brustlatzes mittels zweier höhenverstellbarer Schultergurte am versteiften Rückenteil des Rucksacks und der untere Teil des Brustlatzes am sackförmigen Vorderteil des Rucksacks jeweils durch Klickverschlüsse befestigt wird. Durch eine runde Aussparung in der Mitte der Sitzfläche kann der Tierschwanz frei beweglich herabhängen, zwei weitere Aussparungen in dem sackförmigen Vorderteil des Rucksacks dienen dazu, die Reinschrift Tierhinterbeine hindurchzustecken und somit ebenfalls frei beweglich herabhängen zu lassen. Das sackförmige Vorderteil des Rucksacks wird mittels zweier Reißverschlüsse an den seitlichen Rahmen des versteiften Rückenteils befestigt, durch weitenverstellbare, horizontal verlaufende Klettverschlüsse kann die Weite des sackförmigen Vorderteils des Rucksacks reguliert werden.

Vorteilhaft an der vorliegenden Erfindung ist, dass das Tragegestell dem Tier im Vier-Pfoten-Stand angelegt werden kann und das Tier nicht, wie sonst üblich, mit dem Schwanz voran in den Rucksack gehoben werden muss.

Weiter ist vorteilhaft an der vorliegenden Erfindung, dass durch die höhenverstellbaren Schultergurte, die längenverstellbaren Klickverschlüsse am sackförmigen Vorderteil des Rucksacks sowie die weiteren, längenverstellbaren Klickverschlüsse an den Enden des sackförmigen Vorderteils des Rucksacks Tiere verschiedener Größen sicher und unverrückbar im Rucksack fixiert werden können, um dem Tier einen größtmöglichen Tragekomfort zu gewährleisten ohne es zu sehr einzuengen oder gar durch zu hohe oder zu enge Halsöffnungen zu würgen.

Weitere Einzelheiten ergeben sich aus nachfolgenden Zeichnungen

Dabei zeigt
**Fig. 1** eine Ansicht des Tiertragerucksacks im geöffneten Zustand
**Fig. 2** eine Ansicht des Brustlatzes 4

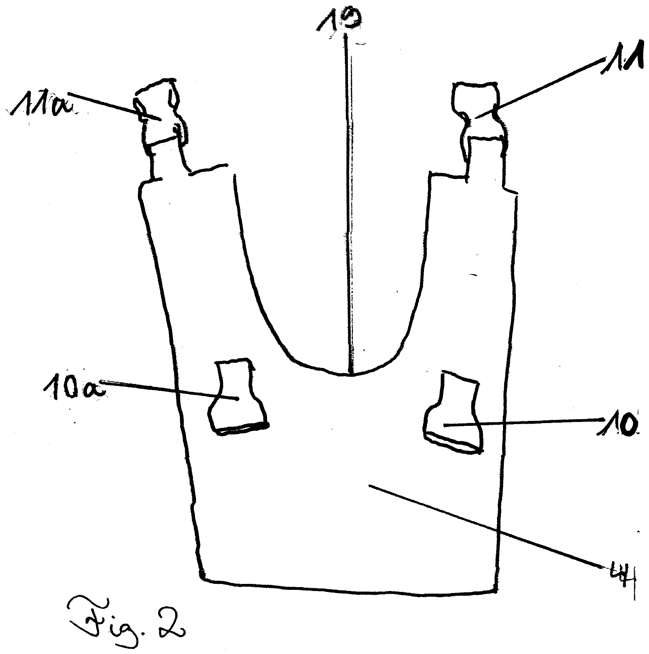

**Fig. 2** eine Ansicht des versteiften Rückenteils 2

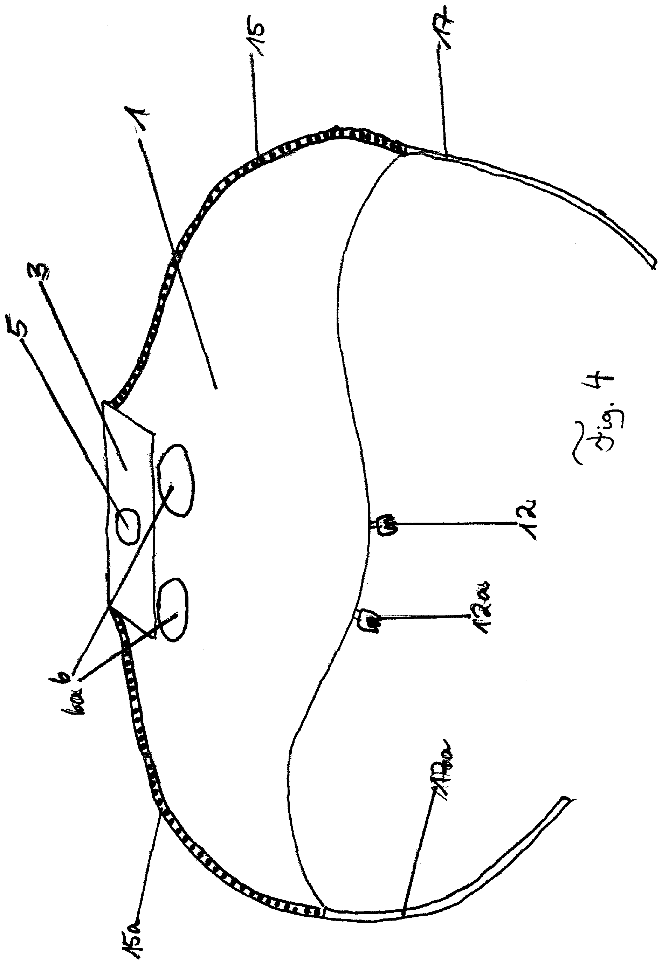

**Fig. 4** eine Ansicht der sackförmigen Vorderteils 2

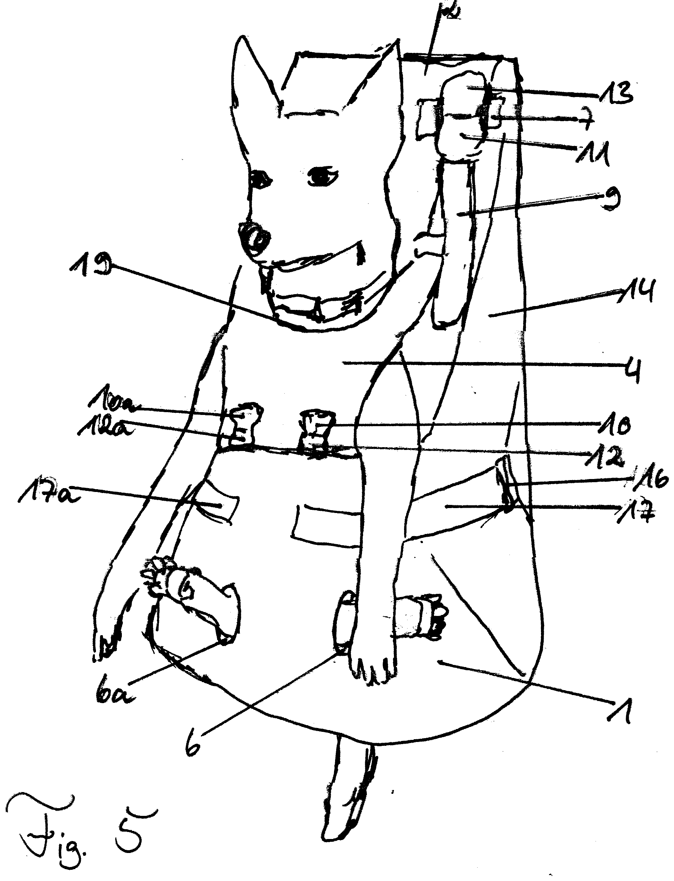

**Fig. 5** eine Ansicht des geschlossenen Rucksacks mit darin befindlichem Tier

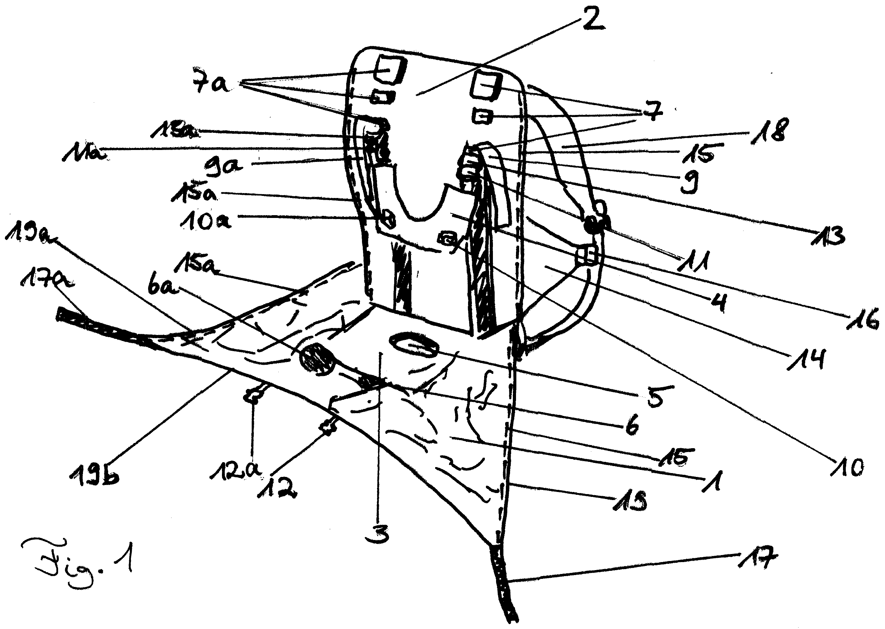

**Fig. 1** zeigt den erfindungsgemäßen Rucksack, bestehend aus einem sackförmigen Vorderteil 1, einem versteiften Rückenteil 2 sowie einer Sitzfläche 3, wobei das sackförmige Vorderteil 1 mittels des Reißverschlusses 15, 15 a beidseitig mit dem Rückenteil 2 verbunden und der Brustlatz 4 mittels der Klickverschlussteile 10, 10 a, höhenverstellbar mit dem sackförmigen Vorderteil 1 mit den Klickverschlussteilen12, 12a und mit den Klickverschlussteilen 11, 11a mit dem Rückenteil 2 mit den Klickverschlussteilen 13, 13a verbunden und das sackförmige Vorderteil 1 mittels der Klettverschlüsse 17, 17 a über die Umlenkschnalle 16, 16a mit den beidseitigen Außentaschen 14, 14 a weitenverstellbar verbunden werden kann.

**Fig. 2** zeigt den Brustlatz 4 mit den unteren Klickverschlussteilen 10, 10a, den oberen Klickverschlussteilen 11, 11a und dem halbrunden Ausschnitt 19.

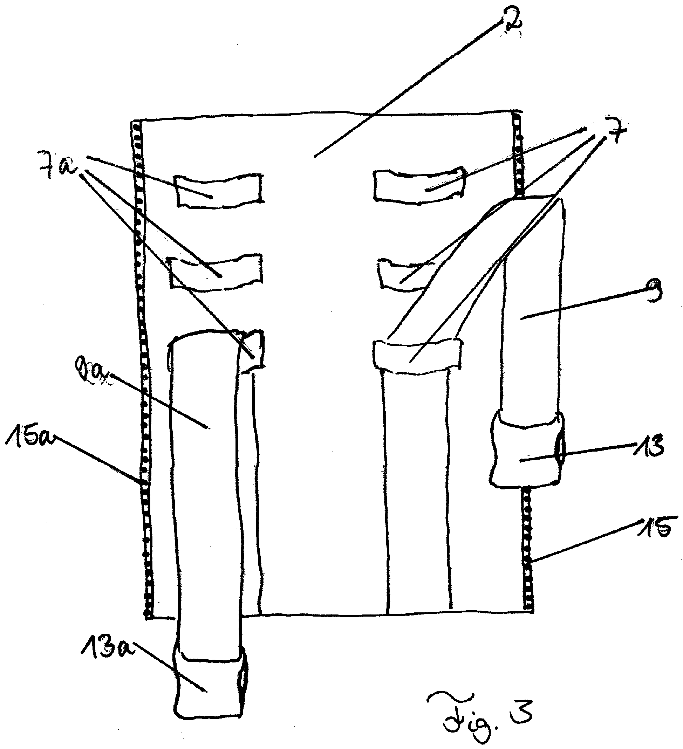

**Fig. 3** zeigt das versteifte Rückenteil 2 des Rucksacks mit den seitlichen Reißverschlüssen 15, 15a sowie den Laschen 7, 7a, durch die der Befestigungsgurt 9, 9a höhenverstellbar gezogen wird und an dessen Ende sich die Klickverschlussteile 13, 13a befinden.

**Fig. 4** zeigt die Sitzfläche 3 mit der lochförmigen Aussparung 5 und das sackförmige Vorderteil 1 des Rucksacks mit den lochförmigen Aussparungen 6, 6a sowie den Klickverschlussteilen 12, 12a und den Klettverschlüssen 17, 17a.

**Fig. 5** zeigt den erfindungsgemäßen Rucksack in geschlossenem Zustand mit darin befindlichem Tier, wobei das Tier mit dem Brustlatz 4 unten an dem sackförmigen Vorderteil 2 mittels der Klickverschlüsse 10, 10a und 12, 12 a und am oberen Teil des Brustlatzes 4 mit den Klickverschlüssen 11, 11a an der versteiften Rückwand 2 mittels der Klickverschlussteile 13, 13a fixiert ist und das sackförmige Vorderteil 2 mittels der Klettverschlüsse 17 über die Umlenkschnallen 16 die Weite des sackförmigen Vorderteils regulieren.

Zum Anlegen des erfindungsgemäßen Rucksacks wird zuerst das Brustlatz 4 mittels der Klickverschlussteile 10, 10 a mit dem sackförmigen Vorderteil 2 und den Klickverschlussteilen 12, 12 a verbunden. Sodann wird der Rucksack dem Tier so angelegt, dass der Rucksack mit dem versteiften Rückenteil 2 auf den Rücken des Tieres gelegt wird, der Schwanz durch die lochförmige Aussparung 5 in der Sitzfläche 3 und die Hinterläufe durch die lochförmigen Aussparungen 6, 6 a in dem sachförmigen Vorderteil 1 geführt werden.

Nun kann der Brustlatz 4 zwischen den Vorderbeinen des Tieres gezogen werden und mittels der Klickverschlussteile 11, 11 a an den Klickverschlussteilen 13, 13 a des versteiften Rückenteils 2 befestigt werden. Dann werden die seitlichen Reißverschlüsse 15, 15a geschlossen und so das sackförmige Vorderteil 1 mit dem versteiften Rückenteil (2) verbunden. Schlussendlich werden die Klettverschlüsse 17, 17 a durch die Umlenkschnallen 16, 16 a gezogen und das sackförmige Vorderteil 1 dadurch in der Weite so reguliert werden, dass das Tier in einer bequemen, nicht einengenden Positionen in dem Rucksack fixiert ist. Der Rucksack kann dann angehoben und auf den Rücken des Trägers verbracht werden.

## Patentansprüche

1. Rucksack zum Tragen eines Tieres, wobei der Rucksack ein rechteckiges versteiftes Rückenteil (2) aufweist mit einer am unteren Ende rechtwinklig abstehenden Sitzfläche (3), einem sackförmigen Vorderteil (1) sowie einem Brustlatz (4), **dadurch gekennzeichnet, dass** der Brustlatz (4) auf einer Seite eine halbkreisförmige Aussparung (19) aufweist und sich auf dem Brustlatz (4) jeweils seitlich von der Aussparung (19) am äußeren Ende zwei Klickverschlussteile (11, 11a) befinden, die jeweils mit Klickverschlussteilen (13, 13a) von zwei höhenverstellbaren Befestigungsgurten (9, 9a) verbunden werden, wobei beide äußere Enden des Brustlatzes mittels dieser Befestigungsgurte am versteiften Rückenteil des Rucksacks befestigt werden, und sich am entgegengesetzten Ende des Brustlatzes (4) wiederum zwei Klickverschlussteile (10, 10a) befinden, die mit Klickverschlussteilen (12, 12a) des sackförmigen Vorderteils (1) verbunden werden.

2. Rucksack nach Anspruch 1, **dadurch gekennzeichnet, dass** das versteifte Rückenteil (2) entlang der langen Seitenteile auf beiden Seiten mehrere Laschen (7, 7a) aufweist, durch die jeweils höhenverstellbar ein Befestigungsgurt (9, 9a) gezogen wird, an deren Ende sich ein Klickverschlussteil (13, 13a) befindet.

3. Rucksack nach Anspruch 1, **dadurch gekennzeichnet, dass** die rechtwinklig abstehende Sitzfläche (3) ein mittige lochförmige Aussparung (5) aufweist.

4. Rucksack nach Anspruch 1, **dadurch gekennzeichnet, dass** das sackförmige Vorderteil (1) am unteren Ende des versteiften Rückenteils (2) an den Außenkanten der Sitzfläche (3) angebracht ist.

5. Rucksack nach Anspruch 4, **dadurch gekennzeichnet, dass** das sackförmige Vorderteil (1) drei Seitenkanten (19, 19a, 19b) aufweist.

6. Rucksack nach Anspruch 4 und 5, **dadurch gekennzeichnet, dass** an den beiden, durch die drei Seitenkanten (19, 19a, 19b) gebildeten Ecken jeweils ein Klettverschluss (17, 17a) angebracht ist.

7. Rucksack nach Anspruch 5, **dadurch gekennzeichnet, dass** an der Seitenkante (19b) mittig zwei Klickverschlussteile (12, 12a) angebracht sind.

8. Rucksack nach Anspruch 4, **dadurch gekennzeichnet, dass** sich im sackförmigen Vorderteil (1) vor der vorderen Außenkante der Sitzfläche (3) mittig zwei lochförmige Aussparungen (6, 6a) angebracht sind.

9. Rucksack nach Anspruch 1, **dadurch gekennzeichnet, dass** das versteifte Rückenteil (2) und die Außenkanten (19, 19a) des sackförmigen Vorderteils (1) Reißverschlüsse aufweisen, mittels derer das sackförmige Vorderteil (1) mit dem versteiften Rückenteil (2) verbunden werden kann.

10. Rucksack nach Anspruch 6, **dadurch gekennzeichnet, dass** an dem unteren Ende des versteiften Rückenteils (2) auf beiden Seiten trapezförmige Außentaschen (14, 14a) angebracht sind, an deren Ende sich jeweils eine Umlenkschnalle (16, 16a) zum Durchführen des Klettverschlusses (17, 17a) befindet.

## Claims

1. A backpack for transporting an animal, wherein the backpack comprises a rectangular stiffened back part (2) with a seating (3) protruding at the lower end thereof at right angles, a sack-like front part (1) as well as a bib (4), **characterized in that** the bib (4) comprises on one side a semicircular cut-out (19) and that on the bib (4) on each side of the cut-out (19) at the outer end two click closure parts (11, 11a) are located which will be connected with click closure parts (13, 13a) of two height-adjustable fastening belts (9, 9a) each, wherein both outer ends of the bib are fastened by means of these fastening belts at the stiffened back part of the backpack, and that at the opposite end of the bib (4) also two click closure parts (10, 10a) are located which will be connected with click closure parts (12, 12a) of the sack-like front part (1).

2. The backpack according to claim 1, **characterized in that** the stiffened back part (2) along the long side parts on both sides comprises several shackles (7, 7a) through which in a height-adjustable manner a fastening belt (9, 9a) is pulled each, wherein on the ends thereof a click closure part (13, 13a) is located.

3. The backpack according to claim 1, **characterized in that** the seating (3) protruding at right angles comprises a central hole-like cut-out (5).

4. The backpack according to claim 1, **characterized in that** the sack-like front part (1) is fixed at the lower end of the stiffened back part (2) at the outer edges of the seating (3).

5. The backpack according to claim 4, **characterized in that** the sack-like front part (1) comprises three lateral edges (19, 19a, 19b).

6. The backpack according to claim 4 and 5, **characterized in that** at both corners being formed by the three lateral edges (19, 19a, 19b) a hook-and-loop fastener (17, 17a) is fixed each.

7. The backpack according to claim 5, **characterized in that** at the lateral edge (19b) in the middle thereof two click closure parts (12, 12a) are fixed.

8. The backpack according to claim 4, **characterized in that** in the sack-like front part (1) in front of the forward outer edge of the seating (3) in the middle thereof two hole-like cut-outs (6, 6a) are provided.

9. The backpack according to claim 1, **characterized in that** the stiffened pack part (2) and the outer edges (19, 19a) of the sack-like front part (1) comprise zippers by means of which the sack-like front part (1) can be connected with the stiffened back part (2).

10. The backpack according to claim 6, **characterized in that** at the lower end of the stiffened back part (2) on both sides trapezoid outside pockets (14, 14a) are arranged, wherein at the ends thereof a return buckle (16, 16a) for pulling through the hook-and-loop fastener (17, 17a) is located each.

## Revendications

1. Sac à dos pour le transport d'un animal, dans lequel le sac à dos présente une partie arrière rigidifiée (2) rectangulaire avec une assise (3) faisant saillie en angle droit à l'extrémité inférieure, une partie avant en forme de sac (1) ainsi qu'un plastron (4),
**caractérisé en ce que**
le plastron (4) présente sur un côté un évidement (19) semi-circulaire et deux éléments de fermeture à clic (11, 11a) se trouvent sur le plastron (4) respectivement latéralement de l'évidement (19) à l'extrémité extérieure, qui sont reliés respectivement à des éléments de fermeture à clic (13, 13a) de deux sangles de fixation (9, 9a) réglables en hauteur, dans lequel les deux extrémités extérieures du plastron sont fixées au moyen de ces sangles de fixation au niveau de la partie arrière rigidifiée du sac à dos et deux éléments de fermeture à clic (10, 10a) se trouvent à leur tour à l'extrémité opposée du plastron (4), qui sont reliés à des éléments de fermeture à clic (12, 12a) de la partie avant en forme de sac (1).

2. Sac à dos selon la revendication 1, **caractérisé en ce que** la partie arrière rigidifiée (2) présente plusieurs brides (7, 7a) le long des parties latérales longues sur les deux côtés, par lesquelles une sangle de fixation (9, 9a) est tirée respectivement de manière réglable en hauteur, à l'extrémité de laquelle se trouve un élément de fermeture à clic (13, 13a).

3. Sac à dos selon la revendication 1, **caractérisé en ce que** l'assise (3) faisant saillie en angle droit présente un évidement centré en forme de trou (5).

4. Sac à dos selon la revendication 1, **caractérisé en ce que** la partie avant en forme de sac (1) est montée à l'extrémité inférieure de la partie arrière rigidifiée (2) au niveau des bords extérieurs de l'assise (3).

5. Sac à dos selon la revendication 4, **caractérisé en ce que** la partie avant en forme de sac (1) présente trois bords latéraux (19, 19a, 19b).

6. Sac à dos selon la revendication 4 et 5, **caractérisé en ce que** respectivement une fermeture auto-agrippante (17, 17a) est montée aux deux coins formés par les trois bords latéraux (19, 19a, 19b).

7. Sac à dos selon la revendication 5, **caractérisé en ce que** deux éléments de fermeture à clic (12, 12a) sont montés centrés au niveau du bord latéral (19b).

8. Sac à dos selon la revendication 4, **caractérisé en ce que** deux évidements en forme de trou (6, 6a) sont montés centrés dans la partie avant en forme de sac (1) devant l'arête extérieure avant de l'assise (3).

9. Sac à dos selon la revendication 1, **caractérisé en ce que** la partie arrière rigidifiée (2) et les bords extérieurs (19, 19a) de la partie avant en forme de sac (1) présentent des fermetures à glissière, au moyen desquelles la partie avant en forme de sac (1) peut être reliée à la partie arrière rigidifiée (2).

10. Sac à dos selon la revendication 6, **caractérisé en ce que** des poches extérieures (14, 14a) trapézoïdales sont montées à l'extrémité inférieure de la partie arrière rigidifiée (2) sur les deux côtés, à l'extrémité desquelles se trouve respectivement une boucle de renvoi (16, 16a) pour le passage de la fermeture auto-agrippante (17, 17a).
